# FASCICULE DE BREVET EUROPEEN

(11) **EP 3 308 881 B1**
(45) Date de publication et mention de la délivrance du brevet: **01.04.2020**
(21) Numéro de dépôt: 17194506.6
(22) Date de dépôt: 03.10.2017
(51) Int. Cl.: B22F 3/105, B33Y 10/00, B22F 3/24, B60K 15/03, B64G 1/40, C22C 14/00, B22F 3/15

(54) **PROCÉDÉ DE FABRICATION ADDITIVE DE RÉSERVOIR D'HUILE DE TURBOMACHINE**
VERFAHREN ZUR HERSTELLUNG EINES ÖLTANKS VON EINER TURBOMASCHINE
ADDITIVE MANUFACTURING METHOD FOR A TURBOFAN ENGINE OIL TANK

(30) Priorité: 13.10.2016 BE 165769
(43) Date de publication de la demande: 18.04.2018
(73) Titulaire: Safran Aero Boosters SA, 4041 Herstal (BE)
(72) Inventeur: BOUGELET, Stéphane, 5170 Profondeville (BE); CLEYET, Florian, 4020 Liège (BE); HENKES, Tom, 4700 Eupen (BE); SERVAIS, Bruno, 4230 Braives (BE)
(74) Mandataire: Lecomte & Partners

(56) Documents cités:
- WO-A1-2014/210338
- DE-A1-102009 034 566
- US-A- 5 352 405
- US-A1- 2007 050 979

## Description

### Domaine technique

L'invention se rapporte au domaine de la fabrication d'un réservoir. Plus précisément, l'invention concerne la fabrication additive de réservoir par parties.

### Technique antérieure

La réalisation d'un réservoir par fabrication additive se heurte à la taille de la chambre d'impression de la machine de fabrication additive utilisée. En effet, cette chambre d'impression délimite chacune des différentes couches de poudre qui y sont solidifiées tour à tour. En particulier, la profondeur de le chambre et la course du plateau mobile limitent la hauteur du réservoir pouvant y être généré. Afin de s'affranchir de cette contrainte, il est connu de réaliser le réservoir concerné par parties.

Le document DE 10 2009 034 558 A1 divulgue un réservoir de carburant pour aéronef. Ce réservoir comprend une coquille externe, cette coquille étant formée une partie tubulaire et une partie en forme de dôme. Ces parties sont chacune produite par fabrication additive à partir d'un alliage de titane. Après réalisation par fabrication additive, ces parties sont soudées l'une à l'autre. Un tel procédé de fabrication permet de réaliser des formes complexes de réservoir tout en employant un alliage d'aluminium.

Le document DE 10 2009 034566 A1 divulgue également un procédé de fabrication additive d'un réservoir de carburant pour aéronef.

### Résumé de l'invention

### Problème technique

L'invention a pour objectif de résoudre au moins un des problèmes posés par l'art antérieur. Plus précisément, l'invention a pour objectif de réduire le coût de production par fabrication additive d'un réservoir. L'invention a également pour objectif d'améliorer la résistance d'un réservoir.

L'invention a également pour objectif de proposer une solution simple, résistante, légère, fiable, facile à produire, d'inspection aisée.

### Solution technique

L'invention a pour objet un procédé de fabrication d'au moins un réservoir avec une enveloppe, notamment un réservoir d'huile de turboréacteur, le procédé comprenant les étapes suivantes : (a) définition de différentes parties d'enveloppe pour chaque réservoir, dont une première partie d'enveloppe avec un creux et une deuxième partie d'enveloppe avec une bosse ; et (b) réalisation des parties d'enveloppe par fabrication additive ; remarquable en ce que l'étape (b) réalisation comprend la réalisation par fabrication additive de la bosse de la deuxième partie d'enveloppe dans le creux de la première partie d'enveloppe, de telle sorte que le creux est de forme complémentaire à la forme de la bosse, la première partie d'enveloppe et la deuxième partie d'enveloppe comprennent chacune une portion sphéroïdale, lesdites portions sphéroïdales étant imbriquées l'une dans l'autre à l'issue de l'étape (b) de réalisation, de plus lors de l'étape (a) de définition, au moins une troisième partie d'enveloppe est définie avec un creux et une bosse, et lors de l'étape (b) de réalisation, la bosse de la troisième partie d'enveloppe est imbriquée dans le creux de la première partie d'enveloppe au travers de la deuxième partie d'enveloppe.

Selon des modes particuliers de réalisation, le procédé peut comprendre une ou plusieurs des caractéristiques suivantes, prises isolément ou selon toutes les combinaisons techniques possibles :

A l'issue de l'étape (b) réalisation, le creux entoure la bosse, ou au moins une portion de la bosse.

Le creux forme une cuvette dans laquelle la bosse est disposée à l'issue de l'étape (b) réalisation.

Au niveau de la bosse, la deuxième partie d'enveloppe comprend une épaisseur E qui est totalement logée dans le creux à l'issue de l'étape (b) réalisation.

A l'issue de l'étape (b) réalisation, la surface de la bosse est majoritairement dans le creux.

La première partie d'enveloppe et la deuxième partie d'enveloppe comprennent chacune une portion tubulaire, lesdites portions tubulaires étant imbriquées l'une dans l'autre à l'issue de l'étape (b) réalisation.

Selon la présente invention, la première partie d'enveloppe et la deuxième partie d'enveloppe comprennent chacune une portion sphéroïdale, lesdites portions sphéroïdales étant imbriquées l'une dans l'autre à l'issue de l'étape (b) réalisation.

Chaque portion sphéroïdale forme généralement un huitième de sphère, ou un quart de sphère, ou une demi-sphère.

Selon la présente invention, le creux est sensiblement de forme complémentaire à la forme de la bosse.

A l'issue de l'étape (b) réalisation, les deux parties d'enveloppe sont écartées l'une de l'autre suivant leurs épaisseurs.

A l'issue de l'étape (b) réalisation, les deux parties d'enveloppe sont empilées suivant leurs épaisseurs.

Chaque partie d'enveloppe présente une longueur, à l'issue de l'étape (b) réalisation, les deux parties d'enveloppe sont décalées l'une par rapport à l'autre suivant leurs longueurs.

A l'issue de l'étape (b) réalisation, la première partie d'enveloppe comprend une bride de fixation faisant saillie vers l'opposé de la deuxième partie d'enveloppe et/ou la deuxième partie d'enveloppe comprend un raidisseur faisant saillie depuis le creux.

Selon la présente invention, lors de l'étape (a) définition, au moins une troisième partie d'enveloppe est définie avec un creux et une bosse, à l'issue de l'étape (b) réalisation la bosse de la troisième partie d'enveloppe est imbriquée dans le creux de la première partie d'enveloppe au travers de la deuxième partie d'enveloppe.

Du point de vue de la première partie d'enveloppe, à l'issue de l'étape (b) réalisation, la deuxième partie d'enveloppe cache la troisième partie d'enveloppe, éventuellement majoritairement ou totalement.

L'enveloppe comprend une portion, éventuellement formée par une tôle d'épaisseur constante, soudée à une des parties d'enveloppe.

La fabrication additive est une fabrication additive par couches, notamment une fabrication additive par couches à base de poudre, par exemple de titane ou d'inconel.

Lors de l'étape (b) réalisation, la fabrication additive est réalisée dans une machine de fabrication additive dans une poche délimitée par des parois latérales fixes.

Le procédé comprend en outre une étape (c) soudage de parties d'enveloppes produites lors de l'étape (b) réalisation.

A l'issue de l'étape (b) réalisation, les parties d'enveloppe sont des parties d'enveloppe d'un même réservoir ou de deux réservoirs distincts.

La surface concave définit un volume interne dans lequel est fabriquée la surface convexe lors de l'étape (b) réalisation.

A l'issue de l'étape (b) réalisation, la bosse épouse le creux; et/ou la bosse et le creux sont libres de contact.

Les parties d'enveloppes ont des longueurs identiques.

La première partie d'enveloppe est identique à la deuxième partie d'enveloppe, la première partie d'enveloppe comprenant notamment une bosse et la deuxième partie d'enveloppe comprenant notamment un creux.

Les portions sphéroïdales comprennent des rayons moyens égaux.

Dans une certaine orientation, la cuvette est apte à contenir un liquide.

A l'issue de l'étape (b) réalisation, la bosse de la deuxième partie est réalisée par fabrication additive dans le creux de la première partie d'un même réservoir.

La poche comprend un plateau mobile, notamment un plateau inférieur, et/ou une face supérieure ouverte.

A l'issue de l'étape (b) réalisation, la première partie est solidaire de la deuxième partie ; et/ou sont liées à un même support, éventuellement sacrificiel.

Le creux de la première partie forme une surface concave et la bosse forme de la deuxième partie forme une surface convexe qui est imbriquée dans la surface concave à l'issue de l'étape (b) réalisation.

Au moins une ou plusieurs ou chaque partie d'enveloppe présente une variation d'épaisseur, et éventuellement un rapport de 1 à 2, ou de 1 à 3, ou de 1 à 4 entre son épaisseur minimale et son épaisseur maximale.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

L'invention permet de réunir différentes parties d'un réservoir dans une même phase de remplissage de la poche de fabrication de la machine de fabrication additive. A la fin d'une campagne de production dans la poche, le rapport entre la poudre solidifiée et la poudre brute augmente. Par ce biais, il devient possible d'optimiser le taux d'utilisation de l'espace utile de la machine de fabrication additive. La taille des réservoirs que peut produire une même machine de fabrication additive peut alors augmenter.

En outre, l'invention permet à la fois d'affiner l'enveloppe pour l'alléger là où les contraintes mécaniques sont moins élevées et de placer à bon escient les soudures ; à nouveau en fonction des contraintes mécaniques. La simplification des soudures peut également entrer en compte.

### Brève description des dessins

La figure 1 représente un turboréacteur.
La figure 2 esquisse un carter de turboréacteur supportant un réservoir.
La figure 3 présente un diagramme du procédé de fabrication du réservoir d'huile selon l'invention.
La figure 4 montre un lot de parties d'enveloppe produit par fabrication additive selon l'invention.
La figure 5 est une coupe selon l'axe 5-5 du lot de parties d'enveloppe de la figure 4 suivant l'invention.

### Description des modes de réalisation

Dans la description qui va suivre, les directions employées peuvent correspondre au sens normal de montage. L'intérieur du réservoir se réfère à son espace de stockage principal, et l'extérieur à son environnement.

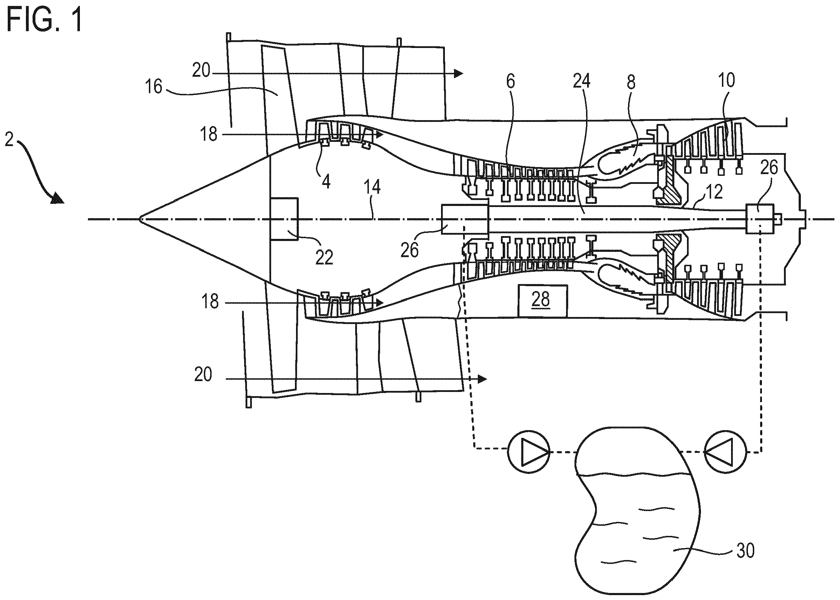

La figure 1 représente de manière simplifiée une turbomachine axiale. Il s'agit dans ce cas précis d'un turboréacteur double-flux. Le turboréacteur 2 comprend un premier niveau de compression, dit compresseur basse pression 4, un deuxième niveau de compression, dit compresseur haute pression 6, une chambre de combustion 8 et un ou plusieurs niveaux de turbines 10. En fonctionnement, la puissance mécanique des turbines 10 transmise via des arbres 24 jusqu'au rotor 12 met en mouvement les deux compresseurs 4 et 6. Ces derniers comportent plusieurs rangées d' aubes de rotor associées à des rangées d'aubes de stators. La rotation du rotor autour de son axe de rotation 14 permet ainsi de générer un débit d'air et de comprimer progressivement ce dernier jusqu'à l'entrée dans la chambre de combustion 8.

Un ventilateur d'arrivée communément désigné fan ou soufflante 16 est couplé au rotor 12. Il génère un flux d'air qui se divise en un flux primaire 18 traversant les différents niveaux sus mentionnés de la turbomachine, et un flux secondaire 20 traversant un conduit annulaire. Le flux secondaire 20 peut être accéléré de sorte à générer une réaction de poussée utile au vol d'un avion.

Le rotor 12 comporte plusieurs arbres 24 concentriques qui sont articulés de manière tournante via des paliers 26. Le refroidissement et/ou la lubrification des paliers 26 et d'un optionnel réducteur épicycloïdal 22 sont assurés par un circuit d'huile, éventuellement fermé. Ce circuit peut être propre au turboréacteur 2. Le circuit d'huile peut également comprendre un échangeur de chaleur 28 pour refroidir l'huile qui peut dépasser les 200°C, et même 230°C dans certains cas. Ces températures amplifient l'agressivité de l'huile corrosive vis-à-vis des joints élastomères et des zones polymères en général.

La position et l'orientation du réservoir 30 sont ici figuratives. En pratique, ce réservoir 30 peut être fixé au carter du turboréacteur 2. Par exemple, il peut être lié au carter de soufflante 16, au carter du compresseur basse pression 4, ou au carter du compresseur haute pression 6. Ces implantations tendent à rajouter des contraintes thermiques, et l'exposent directement aux vibrations du turboréacteur, notamment en cas de perte de pale de soufflante. En fonctionnement, le réservoir 30 est partiellement rempli d'un mélange air huile avec des impuretés telles des particules métalliques abrasives.

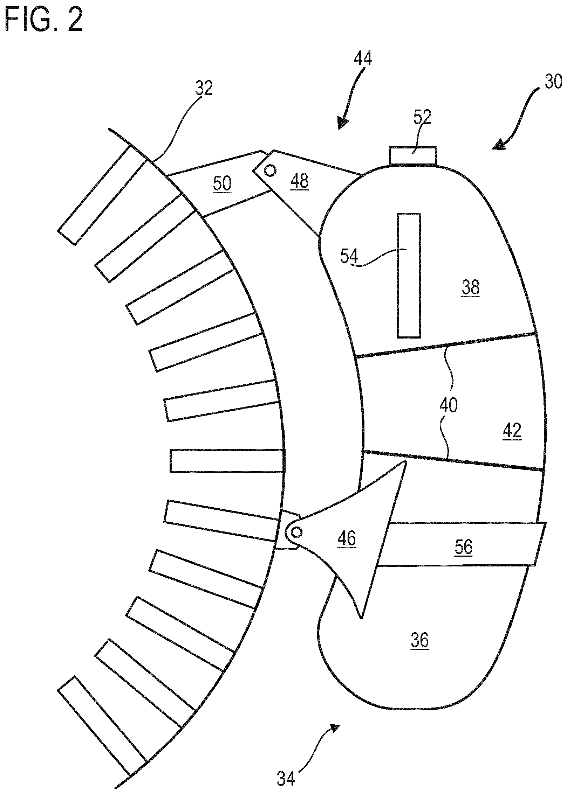

La figure 2 présente la fixation du réservoir d'huile 30 à un carter support 32 du turboréacteur. En l'occurrence, il peut s'agir du carter 32 du compresseur basse pression. Le turboréacteur peut correspondre à celui de la figure 1.

Afin d'augmenter son volume utile malgré la place réduite dans le turboréacteur, le réservoir 30 est essentiellement allongé et courbé afin d'épouser la courbure extérieure du carter support 32. Cette compacité permet une implantation entre deux parois tubulaires rapprochées.

Dans le sens normal de montage, le réservoir 30 peut présenter une enveloppe 34 avec une extrémité inférieure 36 et une extrémité supérieure 38. Ces extrémités (36 ; 38) peuvent être reliées par une soudure 40, ou via une portion centrale 42 de l'enveloppe 34. Chaque soudure 40 peut former une boucle fermée autour de l'axe d'allongement général du réservoir. L'enveloppe 34, véritable peau, délimite un espace principal de stockage (non visible) formant un volume de stockage d'huile. Cet espace est un espace interne destiné à être rempli. Le qualificatif « principal » de l'espace principal est entendu dans le sens où il s'agit du plus grand réceptacle du réservoir 30.

En matière de montage sur le carter support 32, le réservoir 30 montre une portion de fixation 44 faisant saillie par rapport à l'enveloppe 34, par exemple vers le carter 32. Cette portion de fixation 44 peut comprendre une ou au moins deux brides de fixation 46. Les brides 46 peuvent être liées à des épaississements de l'enveloppe 34 formant des socles renforcés et écartés. De son côté, l'extrémité supérieure 38 peut présenter une branche de fixation 48, par exemple liée au carter 32 via un bras rotulé 50.

Le réservoir 30 peut comprendre d'autres équipements. Par exemple, il peut comprendre des orifices d'entrée et de sortie (non représentés). Un bouchon 52 peut être placé en extrémité supérieure 38. Une fenêtre de visualisation 54 du niveau peut être formée vers l'extrémité supérieure 38. Un désaerteur, un évent, et/ou un déshuileur (non représentés) peuvent être associés au réservoir 30.

Le réservoir 30 est avantageusement produit par fabrication additive, au moins partiellement. Son enveloppe 34 peut l'être totalement. La portion centrale 42 est produite par fabrication additive ou à l'aide d'une tôle issue de laminage. L'épaisseur de l'enveloppe 34 peut varier entre 2mm et 0,5mm, ou de 1,5mm à 1mm.

En outre, les brides de fixations 46 peuvent être venues de matière avec l'enveloppe 34. Optionnellement, le réservoir 30 présente une ceinture 56 à l'extérieur. Celle-ci relie les brides 46 et forme une surépaisseur localisée sur l'enveloppe 34.

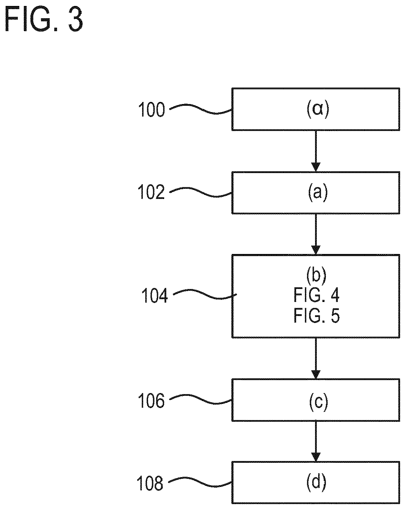

La figure 3 est un diagramme du procédé de fabrication d'au moins un réservoir, par exemple un réservoir d'huile, tel que celui présenté en relation avec les figures précédentes.

Le procédé peut comprendre les étapes suivantes, éventuellement réalisées dans l'ordre introduit ci-dessous :

(a) conception 100 d'un réservoir d'huile de turboréacteur en prenant en compte les contraintes de fonctionnement ; et une durée de vie d'au moins 10 ans, ou 15 ans, ou 25 ans ;
(a) définition 102 de différentes parties d'enveloppe du réservoir, dont une première partie avec un creux et une deuxième partie avec une bosse ; et
(b) réalisation 104 des parties d'enveloppe par fabrication additive dans une machine avec une chambre d'impression de section fixe ;
(c) soudage 106 des parties l'une à l'autre ou les unes aux autres ; et
(d) finition 108 du réservoir, dont le sablage et le traitement de l'enveloppe. Au sens de l'invention, les étapes (a) conception 100, (c) soudage 106 et (d) finition 106 restent entièrement optionnelles.

Les étapes (a) conception 100 et (a) définition 102 peuvent être effectuées simultanement.

L'étape (a) définition 102 de différentes parties d'enveloppe revient à effectuer un découpage géométrique de l'enveloppe. Cette dernière est alors fractionnée virtuellement. La réunion des parties permet de former intégralement l'enveloppe. Par exemple, l'enveloppe est divisée en quatre à huit parties, ou en cinq à neuf parties ; éventuellement pour limiter les soudures. Les parties peuvent être des parties angulaires et/ou des tronçons longitudinaux. Cette étape (a) définition 102 peut être effectuée à l'aide d'un logiciel de conception assistée par ordinateur. Une même extrémité d'enveloppe peut être découpée en plusieurs parties.

L'étape (b) réalisation 104 peut être une fabrication par balayage d'un lit de poudre par un faisceau d'électrons, ou par un rayon laser. L'étape (b) réalisation 104 est effectuée dans une poche sur un plateau mobile d'une machine de fabrication additive où le lit de poudre est renouvelé puis précompacté avant solidification. Lors de cette étape (b) réalisation 104, la poudre peut être préchauffée, par exemple à 700°C. La poudre brute peut avoir une granulométrie de 20µm. Il peut s'agir d'une poudre métallique frittée ou fusionnée localement.

L'étape (c) soudage 108 permet de lier les parties les uns aux autres, par exemple avec des cordons longitudinaux et avec des cordons en cercles.

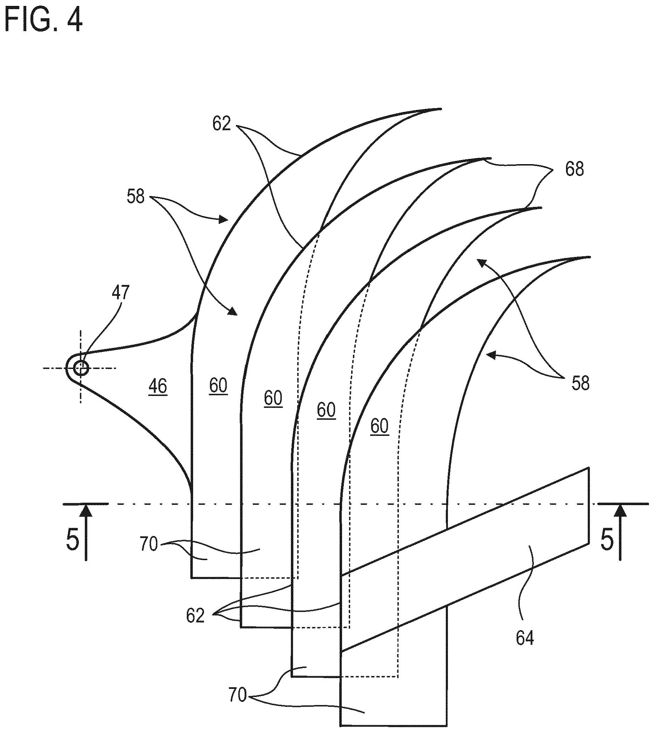

La figure 4 esquisse un résultat, éventuellement intermédiaire, de l'étape (b) réalisation du procédé de la figure 3. Elle montre un lot de parties 58 d'enveloppe produites lors d'un même processus de fabrication additive de la machine utilisée. Les parties 58 sont représentées en coupe, par exemple en leur milieu. Ces parties peuvent être celles d'un même réservoir, ou de plusieurs réservoirs. Ces réservoirs peuvent correspondre à un même modèle, ou à différents modèles de réservoirs.

Ce lot peut former un bloc dont la taille optimise l'occupation de la poche de fabrication afin d'augmenter la cadence de production. Dans ce bloc, les parties 58 sont imbriquées les unes dans les autres. Elles forment des fractions d'enveloppe. Ces parties 58 présentent des surfaces concaves et des surfaces convexes, soit des creux 60 et des bosses 62. Chaque creux 60 et chaque bosse 62 peut se prolonger sur toute la longueur de la partie correspondante. Optionnellement, une tranche ou un bord de partie peut être entendu comme une bosse. Afin d'optimiser l'utilisation la machine de fabrication additive, les bosses sont produites dans les formes en creux lors de l'étape (b) réalisation. Les bosses 62 peuvent épouser les creux 60 dans lesquels elles sont engagées. Leurs surfaces en regard peuvent généralement être complémentaires. Afin d'optimiser encore la fabrication, plusieurs parties pénètrent une même surface concave. C'est-à-dire qu'un même creux 60 peut loger, au moins partiellement plusieurs bosses 62, qui elles-mêmes s'interpénètrent. Au moins 10% ou 20% ou 50% de la surface d'une bosse 62 est contenue dans un ou plusieurs creux 60.

La bride 46 et le raidisseur 64 peuvent être fabriqués vers l'extérieur du bloc. La bride 46 avec un orifice de fixation 47, peut faire saillie depuis une surface concave, soit depuis une bosse 62. De même, le raidisseur 64 peut faire saillie depuis le creux 60 de sa partie 58, mais il peut également atteindre un ou au moins deux creux voisins 60.

Lors de la fabrication additive, les parties 58 peuvent être liées les unes aux autres dans des positions et des orientations respectives qui diffèrent de celle qu'elles auront dans le réservoir fini. Donc, ces parties 58 sont détachées les unes des autres en vue d'être soudés selon leurs orientations respectives prédéfinies.

Les parties 58 peuvent être des parties angulaires. Par exemple, elles peuvent décrire une demi-sphère, un sixième de sphère, en l'occurrence un huitième de sphère 68. Ou encore, elles peuvent former un huitième de coquille d'un cube avec un coin dudit cube. Elles peuvent également comprendre un prolongement, par exemple une portion tubulaire 70 tel un demi-tube ou une fraction angulaire de tube, ou encore une cornière. Lors de l'étape (b) réalisation, les portions tubulaires 70 sont réalisées les unes dans les autres, tout comme les portions de sphères qui restent les unes dans les autres.

Chaque partie 66 présente une direction générale, par exemple suivant leur longueur principale. Une direction générale peut être une droite moyenne des centres de gravité des profils d'une partie, éventuellement des profils horizontaux, et/ou parallèles à l'axe 5-5. Lors de l'étape (b) réalisation, les parties peuvent être décalées selon leurs directions générales. En particuliers, elles peuvent dépasser les unes des autres suivant les directions générales.

Les parties sont produites en formant un empilement selon leur épaisseurs. Elles peuvent conserver un écartement généralement constant, sur la majorité de leur longueur ou sensiblement toute leur longueur. Ceci peut être observé suivant une coupe longitudinale, soit selon les longueurs des parties 58, ou encore des directions générales.

Les parties 66 peuvent être produites avec les équipements, ou des portions d'équipement. Elles peuvent former l'entrée, la sortie, la fenêtre, l'évent, le désaérateur, le déshuileur, la crépine.

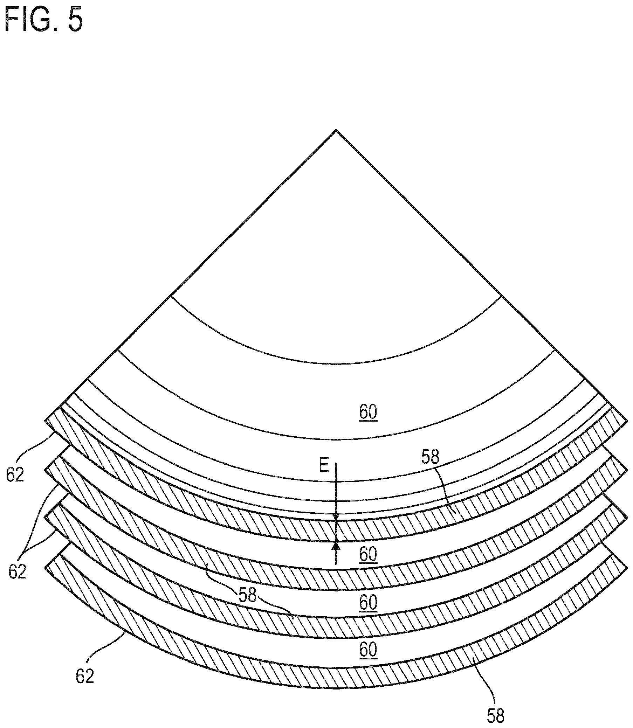

La figure 5 esquisse une coupe du lot de parties 58 d'enveloppe. La coupe suit l'axe 5-5 tracé en figure 4. Les quatre parties 58 peuvent décrire une boucle ou un cercle fermé(e) après l'étape (c) soudage du procédé.

Les différentes parties 58 apparaissent empilées les unes sur les autres selon leurs épaisseurs. Les bosses 62 convexes sont engagées dans les creux 60 concaves en regard, et certaines sont engagées dans un autre creux 60 caché par une partie 58 intercalaire. Selon l'empilement, la bosse 62 de la portion 58 du dessus est engagée dans deux creux 60 de parties 58 d'enveloppes empilées. En particulier, son épaisseur E, par exemple au milieu, est totalement logée dans au moins un ou dans au moins deux creux 60.

Les creux 60 définissent des cuvettes qui forment notamment des bassins. Les cuvettes sont aplaties et ouvertes vers le haut tel qu'il apparait dans la présente figure. Elles présentent chacune un bord formant une boucle en élévation par rapport à leur fond. En fonction de leurs orientations, elles sont aptes à contenir un liquide. Dans l'hypothèse où ces cuvettes seraient remplies d'un liquide, le fait de placer la partie en regard de cette cuvette dans sa position correspondant à l'issue de l'étape (b) fabrication, le liquide déborderait.

## Revendications

1. Procédé de fabrication d'au moins un réservoir (30) avec une enveloppe (34), notamment un réservoir (30) d'huile de turboréacteur (2), le procédé comprenant les étapes suivantes :
(a) définition (102) de différentes parties (58) d'enveloppe pour chaque réservoir (30), dont une première partie (58) d'enveloppe avec un creux (60) et une deuxième partie (58) d'enveloppe avec une bosse (62) ; et
(b) réalisation (104) des parties (58) d'enveloppe par fabrication additive ;
**caractérisé en ce que**
l'étape (b) réalisation (104) comprend la réalisation par fabrication additive de la bosse (62) de la deuxième partie (58) d'enveloppe dans le creux (60) de la première partie (58) d'enveloppe ;
**en ce que** le creux (60) est de forme complémentaire à la forme de la bosse (62) ;
**en ce que** la première partie (58) d'enveloppe et la deuxième partie (58) d'enveloppe comprennent chacune une portion sphéroïdale, lesdites portions sphéroïdales étant imbriquées l'une dans l'autre à l'issue de l'étape (b) réalisation (104) ;
**en ce que** lors de l'étape (a) définition (102), au moins une troisième partie (58) d'enveloppe est définie avec un creux (60) et une bosse (62) ; et **en ce qu'**à l'issue de l'étape (b) réalisation (104) la bosse (62) de la troisième partie (58) d'enveloppe est imbriquée dans le creux (60) de la première partie (58) d'enveloppe au travers de la deuxième partie (58) d'enveloppe.

2. Procédé selon la revendication 1, **caractérisé en ce qu'**à l'issue de l'étape (b) réalisation (104), le creux (60) entoure la bosse (62), ou au moins une portion de la bosse (62), et/ou le creux (60) forme une cuvette dans laquelle la bosse (62) est disposée à l'issue de l'étape (b) réalisation (104).

3. Procédé selon l'une des revendications 1 à 2, **caractérisé en ce qu'**à l'issue de l'étape (b) réalisation (104), la surface de la bosse (62) est majoritairement dans le creux (60).

4. Procédé selon l'une des revendications 1 à 3, **caractérisé en ce que** la première partie (58) d'enveloppe et la deuxième partie (58) d'enveloppe comprennent chacune une portion tubulaire (70), lesdites portions tubulaires (70) étant imbriquées l'une dans l'autre à l'issue de l'étape (b) réalisation (104).

5. Procédé selon l'une des revendications 1 à 4, **caractérisé en ce qu'**à l'issue de l'étape (b) réalisation (104), les deux parties (58) d'enveloppe sont écartées l'une de l'autre suivant leurs épaisseurs.

6. Procédé selon l'une des revendications 1 à 5, **caractérisé en ce qu'**à l'issue de l'étape (b) réalisation (104), les deux parties (58) d'enveloppe sont empilées suivant leurs épaisseurs.

7. Procédé selon l'une des revendications 1 à 6, **caractérisé en ce que** chaque partie (58) d'enveloppe présente une longueur, à l'issue de l'étape (b) réalisation (104), les deux parties (58) d'enveloppe sont décalées l'une par rapport à l'autre suivant leurs longueurs.

8. Procédé selon l'une des revendications 1 à 7, **caractérisé en ce qu'**à l'issue de l'étape (b) réalisation (104), la première partie (58) d'enveloppe comprend une bride de fixation (46) faisant saillie vers l'opposé de la deuxième partie (58) d'enveloppe et/ou la deuxième partie (58) d'enveloppe comprend un raidisseur (64) faisant saillie depuis le creux (60).

9. Procédé selon l'une des revendications 1 à 8, **caractérisé en ce que** l'enveloppe (34) comprend une portion (42), éventuellement formée par une tôle d'épaisseur constante, soudée à une des parties (58) d'enveloppe.

10. Procédé selon l'une des revendications 1 à 9, **caractérisé en ce que** la fabrication additive est une fabrication additive par couches, notamment une fabrication additive par couches à base de poudre, par exemple de titane ou d'inconel.

11. Procédé selon l'une des revendications 1 à 10, **caractérisé en ce qu'**il comprend en outre une étape (c) soudage (106) de parties (58) d'enveloppes produites lors de l'étape (b) réalisation (104).

## Patentansprüche

1. Verfahren zur Herstellung mindestens eines Tanks (30) mit einer Schale (34), insbesondere eines Öltanks (30) eines Turbostrahltriebwerks (2), wobei das Verfahren die folgenden Schritte umfasst:
a) Festlegung (102) verschiedener Schalenabschnitte (58) für jeden Tank (30), von denen ein erster Schalenabschnitt (58) eine Aussparung (60) und ein zweiter Schalenabschnitt (58) eine Ausbuchtung (62) aufweist; und
b) Herstellung (104) der Schalenteile (58) durch additive Fertigung; **dadurch gekennzeichnet, dass**
der Schritt (b) Herstellung (104) die Herstellung der Ausbuchtung (62) des zweiten Schalenabschnitts (58) in der Aussparung (60) des ersten Schalenabschnitts (58) durch additive Herstellung umfasst;
die Aussparung (60) eine zur Form der Ausbuchtung (62) komplementäre Form hat;
der erste Schalenabschnitt (58) und der zweite Schalenabschnitt (58) jeweils einen kugelförmigen Abschnitt aufweisen, wobei die kugelförmigen Abschnitte am Ende des Herstellungsschrittes (b) (104) ineinander eingebettet sind;
bei der Festlegung (102) des Schrittes (a) mindestens ein Drittel des Schalenabschnitts (58) mit einer Aussparung (60) und einer Ausbuchtung (62) festgelegt wird;
am Ende des Herstellungsschrittes (b) (104) die Ausbuchtung (62) am dritten Schalenabschnitt (48) durch den zweiten Schalenabschnitt (58) hindurch in die Aussparung (60) des ersten Schalenabschnitts (58) eingebettet ist.

2. Verfahren nach Anspruch 1, **dadurch gekennzeichnet, dass** am Ende des Herstellungsschrittes (b) (104) die Aussparung (60) die Ausbuchtung (62) oder zumindest ein Teil der Ausbuchtung (62) umgibt und/oder die Aussparung (60) einen Becher bildet, in dem die Ausbuchtung (62) am Ende des Herstellungsschrittes (b) (104) angebracht wird.

3. Verfahren nach einem der Ansprüche 1 bis 2, **dadurch gekennzeichnet, dass** am Ende des Herstellungsschrittes (b) (104) die Oberfläche der Ausbuchtung (62) zum größten Teil innerhalb der Aussparung (60) liegt.

4. Verfahren nach einem der Ansprüche 1 bis 3, **dadurch gekennzeichnet, dass** der erste Schalenabschnitt (58) und der zweite Schalenabschnitt (58) jeweils einen röhrenförmigen Abschnitt (70) aufweisen, wobei die röhrenförmigen Abschnitte (70) am Ende des Herstellungsschrittes (b) (104) ineinander eingebettet sind.

5. Verfahren nach einem der Ansprüche 1 bis 4, **dadurch gekennzeichnet, dass** am Ende des Herstellungsschrittes (b) (104) die beiden Schalenabschnitte (58) in Richtung ihrer Dicken voneinander beabstandet sind.

6. Verfahren nach einem der Ansprüche 1 bis 5, **dadurch gekennzeichnet, dass** am Ende des Herstellungsschrittes (b) (104) die beiden Schalenabschnitte (58) in Richtung ihrer Dicke gestapelt sind.

7. Verfahren nach einem der Ansprüche 1 bis 6, **dadurch gekennzeichnet, dass** jeder Schalenabschnitt (58) am Ende des Herstellungsschrittes (b) (104) eine Länge aufweist, wobei die beiden Schalenabschnitte (58) in Richtung ihrer Längen zueinander versetzt sind.

8. Verfahren nach einem der Ansprüche 1 bis 7, **dadurch gekennzeichnet, dass** am Ende des Herstellungsschrittes (b) (104) der erste Schalenabschnitt (58) einen Befestigungsflansch (46) aufweist, der zur gegenüberliegenden Seite des zweiten Schalenabschnittes (58) hin vorsteht und/oder der zweite Schalenabschnitt (58) eine Strebe (64) aufweist, die aus der Aussparung (60) herausragt.

9. Verfahren nach einem der Ansprüche 1 bis 8, **dadurch gekennzeichnet, dass** die Schale (34) einen Abschnitt (42) umfasst, der möglicherweise aus Blech konstanter Dicke gebildet und mit einem der Schalenabschnitte (58) verschweißt ist.

10. Verfahren nach einem der Ansprüche 1 bis 9, **dadurch gekennzeichnet, dass** die additive Herstellung ein Herstellungsverfahren durch Hinzufügen von Schichten ist, insbesondere die additive Herstellung mit pulverförmigen Schichten, beispielsweise unter Verwendung von Titan- oder Inconel-Pulver.

11. Verfahren nach einem der Ansprüche 1 bis 10, **dadurch gekennzeichnet, dass** es ferner einen Schritt (c) Schweißen (106) von Schalenabschnitten (58) umfasst, die während des Herstellungsschrittes (b) (104) hergestellt wurden.

## Claims

1. Method for the manufacturing of at least one tank (30) with a shell (34), in particular a turbojet engine (2) oil tank (30), said method comprising the following steps:
(a) definition (102) of different shell sections (58) for each tank (30), whereof a first shell section (58) has a recess (60) and a second shell section (58) has a bulge (62); and
(b) production (104) of the shell sections (58) by additive manufacturing;
**characterized in that**
the (b) production (104) step comprises the production by additive manufacturing of the bulge (62) of the second shell section (58) in the recess (60) of the first shell section (58);
**in that** the recess (60) has a shape that is complementary to the shape of the bulge (62);
**in that** the first shell section (58) and the second shell section (58) each comprise a spheroidal portion, said spheroidal portions being embedded one in the other at the end of the (b) production (104) step;
**in that** during step (a) definition (102), at least a third of the shell section (58) is defined with a recess (60) and a bulge (62);
and **in that** at the end of the (b) production (104) step the bulge (62) on the third shell section (48) is embedded in the recess (60) in the first shell section (58) through the second shell section (58).

2. Method according to Claim 1, **characterized in that** at the end of the (b) production (104) step, the recess (60) surrounds the bulge (62), or at least a portion of the bulge (62) and/or the recess (60) forms a cup in which the bulge (62) is disposed at the end of the (b) production (104) step.

3. Method according to any of Claims 1 to 2, **characterized in that** at the end of the (b) production (104) step, the surface of the bulge (62) is for the most part within the recess (60).

4. Method according to any of Claims 1 to 3, **characterized in that** the first shell section (58) and the second shell section (58) each comprise a tubular portion (70), said tubular portions (70) being embedded one in the other at the end of the (b) production (104) step.

5. Method according to any of Claims 1 to 4, **characterized in that** at the end of the (b) production step (104), the two shell sections (58) are distant from one another in the direction of their thicknesses.

6. Method according to any of Claims 1 to 5, **characterized in that** at the end of the (b) production (104) step, the two shell sections (58) are stacked in the direction of their thickness.

7. Method according to any of Claims 1 to 6, **characterized in that** each shell section (58) exhibits a length at the end of the (b) production (104) step, the two shell sections (58) being offset one in respect of the other in the direction of their lengths.

8. Method according to any of Claims 1 to 7, **characterized in that** and **in that** at the end of the (b) production (104) step, the first shell section (58) comprises a mounting flange (46) which projects towards the opposite side of the second shell section (58) and/or the second shell section (58) comprises a stiffener (64) which projects from the recess (60).

9. Method according to any of Claims 1 to 8, **characterized in that** the shell (34) comprises a portion (42), possibly formed by sheet metal with a constant thickness, welded to one of the shell sections (58).

10. Method according to any of Claims 1 to 9, **characterized in that** the additive manufacturing is a manufacturing technique through the addition of layers, in particular additive manufacturing with powder-based layers, for example using titanium or Inconel powder.

11. Method according to any of Claims 1 to 10, **characterized in that** it further comprises a step (c) welding (106) of shell sections (58) produced during the (b) production (104) step.
